Europäisches Patentamt

**European Patent Office**

Office européen des brevets

(11) Veröffentlichungsnummer: **0 048 237**
**B1**

(12) **EUROPÄISCHE PATENTSCHRIFT**

(45) Veröffentlichungstag der Patentschrift:
**06.08.86**

(21) Anmeldenummer: **81890140.7**

(22) Anmeldetag: **14.08.81**

(51) Int. Cl.⁴: **G 01 N 1/24,** G 01 N 15/06

(54) **Verfahren und Messeinrichtung zur Bestimmung des Partikelgehaltes von Verbrennungsabgasen.**

(30) Priorität: **11.09.80 AT 4584/80**

(43) Veröffentlichungstag der Anmeldung:
**24.03.82 Patentblatt 82/12**

(45) Bekanntmachung des Hinweises auf die Patenterteilung:
**06.08.86 Patentblatt 86/32**

(84) Benannte Vertragsstaaten:
**CH DE FR GB IT LI SE**

(56) Entgegenhaltungen:
**AT - A - 322 881**
**DE - B - 1 214 024**
**FR - A - 1 518 172**
**US - A - 3 995 494**

(73) Patentinhaber: **List, Hans, Heinrichstrasse 126,**
**A-8010 Graz (AT)**

(72) Erfinder: **Krachler, Walter, Angermayrstrasse 30,**
**A-8010 Hart bei St. Peter (AT)**
Erfinder: **Schachner, Bruno, Wartendorfer**
**Hauptstrasse 103c, A-8010 Graz (AT)**

(74) Vertreter: **Krause, Walter, Dr. Dipl.-Ing.,**
**Postfach 200 Singerstrasse 8, A-1014 Wien (AT)**

**Beschreibung**

Die Erfindung betrifft ein Verfahren zur Bestimmung des Partikelgehaltes, insbesondere des Russgehaltes, von Verbrennungsabgasen, bei dem beim Durchgang der Verbrennungsabgase durch eine Probenentnahmevorrichtung Partikeln auf gasdurchlässigem Filtermaterial angelagert werden, wobei dem Filtermaterial ein vorbestimmtes Probenvolumen pro beaufschlagter Filterflächeneinheit zugeleitet wird, und bei dem die Lichtreflexion des mit Partikeln geschwärzten Filtermaterials gemessen und dem Partikelgehalt der Verbrennungsabgase zugeordnet wird, bzw. eine Messeinrichtung gemäss dem Oberbegriff des Anspruchs 4.

Derartige Verfahren bzw. Messeinrichtungen, welche den Russgehalt von Verbrennungsabgasen nach der Filtermethode bestimmen, sind beispielsweise aus der FR-A-1 518 172 bekannt. Dabei wird ein spezifiziertes Volumen des zu prüfenden Abgases durch eine spezifizierte Fläche eines Filters mit genau bestimmten Eigenschaften geleitet. Die aus den Abgasen ausgefilterten Teilchen lagern sich auf dem Filtermaterial ab und schwärzen dieses. Über einen fotoelektrischen Messkopf wird sodann der Unterschied in der Lichtstromreflexion zwischen dem geschwärzten und ungeschwärzten Filtermaterial bestimmt und als Aussagegrösse für den Partikel- bzw. Russgehalt der Abgase verwendet.

Die bekannten Messeinrichtungen erlauben zuverlässige Aussagen über den Russgehalt von Verbrennungsabgasen bei stationären Betriebszuständen der die Abgase emittierenden Brennkraftmaschine, sind jedoch aufgrund des Aufbaues bzw. der Funktion der Probenentnahmevorrichtung auf relativ geringe Probenentnahmefrequenzen begrenzt und daher für rasch verlaufende dynamische Änderungen des Abgaszustandes, z.B. während der Beschleunigungsphase einer Verbrennungskraftmaschine, nicht verwendbar.

Aufgabe der vorliegenden Erfindung ist es, ein Verfahren bzw. eine Messeinrichtung der eingangs genannten Art so zu verbessern, dass auch rasche Veränderungen des Russgehaltes in Verbrennungsabgasen erfasst und messtechnisch ausgewertet werden können.

Dies wird gemäss der vorliegenden Erfindung durch die Merkmale des Anspruchs 1 und in einer Variante durch die Merkmale des Anspruchs 2 ermöglicht. Durch diese Massnahmen ist es möglich, die in der Messfrequenz durch das Filtermaterial geleitete Abgasmenge auch bei hohen Messfrequenzen genau auf einem gewünschten Wert zu halten. Die bei hohen Messfrequenzen unter Umständen auftretenden Schwingungen in der Abgassäule, welche hervorgerufen werden können durch die im Takte der Probenaufnahme immer wieder erfolgende Unterbrechung und Öffnung der Abgaszuleitung werden durch die Sicherstellung eines konstanten insgesamten Durchströmquerschnitts wirksam vermieden. Damit können also sehr hohe Messfrequenzen realisiert werden, ohne dass es durch den Vorgang der Probenaufnahme selbst zu einer Beeinflussung des Mengendurchsatzes an Abgas und damit zu einer unmittelbaren Beeinflussung des Messergebnisses kommen kann. Der Verlauf von dynamischen Änderungen im Partikel- bzw. Russgehalt der Abgase ist also auf einfache Weise messtechnisch erfassbar.

Gemäss einer Ausgestaltung der Erfindung ist vorgesehen, dass zur Korrektur von Messwertschwankungen, die infolge variierender Filterdurchlässigkeit auftreten können, eine Differenzdruckmessung vor der Beladung des Filtermaterials durchgeführt wird. Die Korrektur kann beispielsweise durch Änderung zumindest eines der gemessenen Drücke über eine Verstellvorrichtung zur Anpassung an den Sollwert oder durch direkte messtechnische Korrektur des Messergebnisses erfolgen.

Eine erfindungsgemässe Messeinrichtung ist im Anspruch 4 gekennzeichnet. Im Zusammenhang mit der genannten Einrichtung ist durch die Probenkammern eine genau definierte Probenmenge einhaltbar. Ferner ist dadurch auf einfache Weise eine schwingungsfreie Probenentnahme in der Abgaszuleitung gesichert, und es wird bei hohen Messfrequenzen eine besonders einfache Probenentnahme ermöglicht.

Gemäss einer besonders bevorzugten Ausbildung der Erfindung ist dabei vorgesehen, dass die Probenkammern im Kammerzylinder als in dessen Längsrichtung durchgehende Bohrungen ausgeführt sind, die radial zur Mantelfläche des Kammerzylinders führende Entleerungsöffnungen aufweisen, dass das Filtermaterial über zumindest einen der Winkelteilung der Entleerungsöffnungen der Probenkammern am Kammerzylinder entsprechenden Umfangsteil anliegt, dass zur Erzeugung der für die Entleerung der Probenkammern erforderlichen Druckdifferenz eine Pumpe vorgesehen ist und die den Kammerzylinder zumindest im Bereich des aufliegenden Filtermaterials umgebende Abdeckvorrichtung als Gehäuse ausgebildet ist, welches gegen das Filtermaterial bzw. den Kammerzylinder abdichtet, sodass der Inhalt jeder einzelnen Probenkammer, nachdem durch Weiterdrehung des Kammerzylinders die Füllung über die Steueröffnung beendet ist, durch die Wirkung dieser Druckdifferenz über die Entleerungsöffnungen durch das Filtermaterial entleert wird. Der Kammerzylinder weist also rotationssymmetrisch mit bestimmter Teilung angeordnete Längsbohrungen auf, und wird während der Probenentnahme über einen geeigneten Antrieb so angetrieben, dass über die nacheinander gefüllten Probenkammern die jeweils gewünschte Messfrequenz der Probenentnahme bzw. Auswertung realisierbar ist. Da die Steueröffnung so ausgebildet ist, dass der Zuströmquerschnitt zu den Probenkammern zeitlich zumindest annähernd konstant ist – dies ist etwa möglich durch Ausbildung der Steueröffnung als Langloch, welches eine zumindest dem Durchmesser der als Längsbohrungen ausgeführten Probekammern entsprechende Breite und eine der Umfangsteilung der Probenkammern, oder einem ganzzahligen Vielfachen davon, entsprechende Länge aufweist – wird also zu jedem Zeitpunkt der Probenentnahme der gleiche Durchströmquerschnitt für das Abgas freigegeben, womit Druckschwingungen, welche den Füllungsgrad der Probenkammern in unbestimmter Weise beeinflussen würden, sicher vermieden werden. Nach der abgeschlossenen Füllung der einzelnen Probenkammern wird die in ihnen enthaltene Abgasmenge über eine von der Einbringung der Abgasprobe in die Probenkammern unabhängige Druckdifferenz durch das am Aussenmantel des Kammerzylinders aufliegende Filtermaterial entleert. Ohne weiters wäre es aber auch möglich, die in den Probekammern enthaltene Abgasmenge z.B. durch Erhöhung des Druckes des bei der Entleerung in die Kammern nachströmenden Mediums, durch das Filtermaterial zu befördern.

Um sicherzustellen, dass während der Probenaufnahme bzw. während des Weitertransportes der gefüllten Probenkammern kein Austritt des Abgases durch die Abströmöffnungen und damit keine Vorschwärzung des Filters erfolgt, ist nach einem anderen Vorschlag der Erfindung vorgesehen, dass die Probenkammern Sperreinrichtungen aufweisen, welche die Entleerungsöffnungen zur Mantelfläche des Kammerzylinders nur im Entleerungsbereich der jeweiligen Probenkammer freigeben. Damit erfolgt also die Entleerung des in den Probenkammern eingeschlossene Probenvolumens auf jeden Fall nur nach abgeschlossener Probenaufnahme, womit sichergestellt ist, dass der Schwärzungsgrad auf dem Filtermaterial wirklich immer der gleichen Abgasmenge entspricht.

Nach einer vorteilhaften Ausbildung der Erfindung können die Sperreinrichtungen aus je einem, eine Sackbohrung aufweisenden und in die Abströmöffnung axial beweglich eingedichteten, federbelasteten Ventilschaft bestehen, der über einen Querbalken von der Spannung des Filtermaterials betätigbar ist und bei aufliegendem Filtermaterial mittels einer Querbohrung die Probenkammer mit der am Filtermaterial mündenden Sackbohrung verbindet. Es wird also in diesem Falle durch die Spannung des aufliegenden Filtermaterials selbst die die Probenkammern bzw. deren Abströmbohrung abdichtende Sperreinrichtung betätigt, womit es also bei entsprechender Anordnung der Steueröffnung bzw. Auslegung der Umschlingung des Kammerzylinders durch das beispielsweise bandförmige Filtermaterial nur in einem bestimmten Bereich nach erfolgter Füllung der Probenkammern zu einer Entleerung der Probe daraus kommen kann.

Nach einem anderen Vorschlag ist es in diesem Zusammenhang auch möglich, dass die Sperreinrichtungen von konzentrisch und axial beweglich in den Probenkammern gelagerten, federbelasteten Rohrschiebern gebildet sind, welche über eine Stirnfläche des Kammerzylinders vorstehen und von einer ausserhalb des Kammerzylinders angeordneten Steuerkulisse gegen die Federkraft verschiebbar sind. Damit ist im wesentlichen der gleiche Effekt erzielt, jedoch hier unabhängig vom auf dem Kammerzylinder aufliegenden Filtermaterial, was unter Umständen eine grössere Präzision bei der Steuerung der Abströmbohrungen ermöglicht.

Nach einer besonders vorteilhaften Ausbildung der Erfindung weist die Abdeckvorrichtung im Entleerungsbereich Spülöffnungen auf, die mit den Füll- und Abströmöffnungen der Probenkammern zusammenwirken, wodurch diese bei der Entleerung der Probe mit einem Reinigungsmedium vorzugsweise Frischluft, durchspülbar sind. Es wird also bei der Entleerung der Probe aus der Probenkammer sichergestellt, dass das gesamte in die Probenkammer eingebrachte Abgas durch das Filtermaterial abgeführt und die Probenkammer gleichzeitig für die neuerliche Aufnahme einer Abgasprobe gereinigt wird. Dabei ist es besonders vorteilhaft, wenn die Spülöffnungen gemäss einem weiteren Merkmal der Erfindung jeweils gleichzeitig mehrere Füllöffnungen und Abströmöffnungen überdecken. Damit kann also die Entleerung bzw. die Nachspülung der Probenkammern mit Frischluft über einen von der Ausbildung der Spülöffnungen abhängigen Drehwinkelbereich erfolgen, was es erlaubt, die notwendige Druckdifferenz für die Entleerung der Probe durch das Filtermaterial gering zu halten, wodurch ein Abheben des Filtermaterials vom Aussenumfang des Kammerzylinders mit Sicherheit vermieden werden kann.

Nach einer anderen Ausbildung der Erfindung weist die Probenentnahmevorrichtung ein Steuerrad auf, welches achsparallel zum Kammerzylinder drehbar gelagert ist und jeweils mit zumindest einem Teil seiner dem Kammerzylinder zugewandten Stirnfläche gegen zumindest einen Teil der Stirnfläche des Kammerzylinders abdichtet, dass das Steuerrad rotationssymmetrisch um seine Achse liegende Messkammern aufweist, die zur am Kammerzylinder anliegenden Stirnfläche offen sind, sodass während der über einen gemeinsamen Antrieb erfolgenden Drehung von Kammerzylinder und Steuerrad die Abströmöffnungen einer bestimmten Anzahl von Probenkammern über einen bestimmten Drehwinkelbereich in Verbindung mit einer entsprechenden Anzahl von Messkammern stehen, und dass die Messkammern die Entleerungsöffnungen zur Mantelfläche des Steuerrades aufweisen, wodurch während der Überdeckung der Messkammern mit den Abströmöffnungen Abgas aus den Probenkammern durch das auf der Mantelfläche des Steuerrades aufliegende Filtermaterial entleerbar ist, wobei die Füllöffnungen der Probenkammern in diesem Drehwinkelbereich mit zumindest einer Spülöffnung in Verbindung stehen. Bei dieser Ausführung wird also das in die Probenkammern im Kammerzylinder auf ähnliche Weise wie bei der vorher besprochenen Ausführung eingebrachte Probenvolumen in einem bestimmten Drehwinkelbereich des Kammerzylinders in Messkammern des Steuerrades übergeleitet, von denen es, wiederum auf ähnliche Weise wie bei der zuvor besprochenen Ausführung, durch das nunmehr am Steuerrad aufliegende Filtermaterial entleert wird.

Nach einer besonders bevorzugten Ausbildung der Erfindung ist dabei vorgesehen, dass der Teilkreisdurchmesser sowie die Anzahl der Abströmöffnungen des Kammerzylinders halb so gross wie der Teilkreisdurchmesser bzw. die Anzahl der mit den Abströmöffnungen zusammenwirkenden Messkammern am Steuerrad sind, und dass die Abströmöffnungen kreisförmige Querschnitte haben und die Messkammern in Form sich in radialer Richtung erstreckender Langlöcher ausgebildet sind. Der Kammerzylinder ist dabei mit der doppelten Drehzahl des Steuerrades angetrieben, wobei die Achsen von Steuerrad und Kammerzylinder um den halben Teilkreisdurchmesser der Abströmöffnungen des Kammerzylinders parallel verschoben angeordnet sind. Die Breite der Messkammern ist zumindest annähernd gleich dem Durchmesser der Abströmöffnungen und die Länge ist annähernd gleich der während des Zusammenwirkens mit den Abströmöffnungen in radialer Richtung überstrichenen Strecke. Durch diese spezielle Geometrie bewegt sich der Mittelpunkt einer Abströmöffnung des Kammerzylinders immer entlang eines Durchmessers des Steuerrades, wobei dieser Durchmesser gleichzeitig die Längsachse der jeweils zugehörigen langlochförmigen Messkammer im Steuerrad ist. Damit ist über einen längeren Zeitraum eine teilweise bis totale Überdeckung von Abströmöffnung und Messkammer an der Berührungsfläche von Steuerrad und Kammerzylinder gegeben, während dem die Entleerung der Abgasprobe und die Einbringung der Frischluft in die Proben- bzw. Messkammer erfolgt.

Eine Variante der erfindungsgemässen Messeinrichtung ist im Anspruch 13 gekennzeichnet. Durch die verformbaren Oberflächen der beiden Kanalzylinder ist somit ein Bereich zwischen diesen definiert, innerhalb welchem unter Zwischenlage des Filtermaterials ein durchgehender Abgaskanal für die Durchleitung der Abgasprobe abgedichtet ist. Es entstehen wiederum der Form der Mündungen der Kanäle angepasste einzelne Schwärzungsbereiche auf dem beispielsweise bandförmigen Filtermaterial, welche für den Russbzw. Partikelgehalt der Abgase im zeitlichen Bereich des abdichtenden Zusammenwirkens von jeweils zwei Kanälen charakteristisch sind.

Eine weitere Variante der erfindungsgemässen Messeinrichtung ist im Anspruch 14 gekennzeichnet. Damit ist es möglich, den Einfluss der bei der Durchleitung des Abgases durch das Filtermaterial seitlich zuströmenden Zuluft weitgehend auszuschalten. In der zusätzlichen, beispielsweise von einem Absaugquerschnitt gebildeten Absaugvorrichtung wird eine Druckdifferenz erzeugt, welche die zuströmende Luft und eine geringe Menge Abgas absaugt, womit gesichert ist, dass durch das Filter nur weitgehend unverdünntes Abgas geführt wird.

Um eine Beeinflussung des Messergebnisses durch während der Probenentnahme in der Probenentnahmevorrichung kondensierende Dämpfe des Abgases zu vermeiden, wäre es weiters auch möglich, dass die Probenentnahmevorrichtung mittels einer Thermostatisiereinrichtung auf einer Temperatur über dem Taupunkt der Dämpfe im Abgas gehalten wird.

Die Erfindung wird im folgenden anhand von in der Zeichnung dargestellten Ausführungsbeispielen näher erläutert. Es zeigen:

Fig. 1 teilweise schematisch ein Ausführungsbeispiel der vorliegenden Erfindung,

Fig. 2 einen Schnitt entlang der Linie II–II in Fig. 1 in vergrössertem Massstab,

Fig. 3 einen teilweisen Schnitt durch den Kammerzylinder eines anderen Ausführungsbeispiels gemäss der Erfindung,

Fig. 4 auf der linken Seite einen Schnitt entlang der Linie IVa–IVa in Fig. 3 und auf der rechten Seite einen Schnitt entlang der Linie IVb–IVb in Fig. 3,

Fig. 5 einen Schnitt entsprechend der Fig. 2 durch ein anderes Ausführungsbeispiel der Erfindung,

Fig. 6 ein Detail der Kulissensteuerung bei dem Ausführungsbeispiel nach Fig. 5,

Fig. 7 einen Schnitt durch ein weiteres Ausführungsbeispiel der Erfindung,

Fig. 8 eine schematische Ansicht entlang des Pfeiles VIII in Fig. 7,

Fig. 9 eine Darstellung der Kopfplatte aus Fig. 7,

Fig. 10 schematisch ein weiteres Ausführungsbeispiel gemäss der vorliegenden Erfindung,

Fig. 11 einen bei der Messung mit der Messeinrichtung nach Fig. 10 erhaltenen Filtermaterialstreifen,

Fig. 12 schematisch einen Teil eines Ausführungsbeispiels,

Fig. 13 eine erfindungsgemässe Ausführung des Messkopfes entsprechend den Fig. 10 und 12,

Fig. 14 ein anderes Ausführungsbeispiel nach der vorliegenden Erfindung und

Fig. 15 einen Schnitt entlang der Linie XV–XV in Fig. 14.

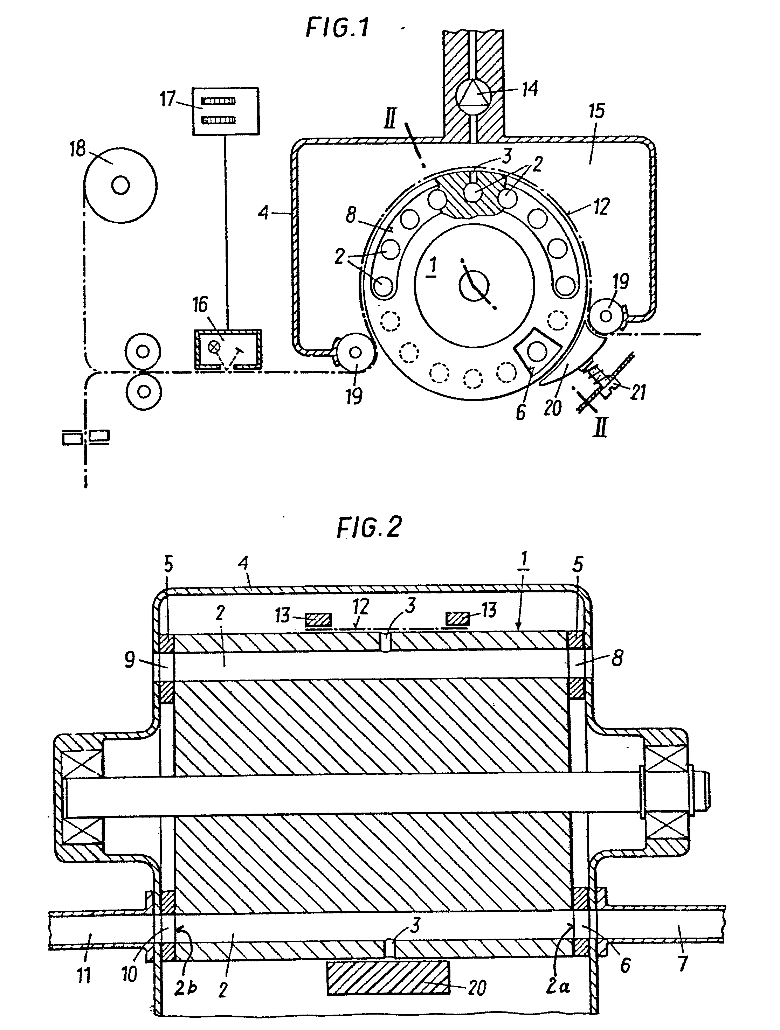

Die in Fig. 1 dargestellte Messeinrichtung besteht im wesentlichen aus einem Kammerzylinder 1, in dem eine Anzahl von Probenkammern 2 konzentrisch zur Drehachse angeordnet sind. Die Probenkammern 2 im Kammerzylinder 1 sind als in dessen Längsrichtung durchgehende Bohrungen ausgeführt und an beiden Stirnflächen des Kammerzylinders 1 offen. Weiters weisen die Probenkammern 2 je eine radial zur Mantelfläche des Kammerzylinders 1 führende Entleerungsöffnung 3 auf. Der Kammerzylinder 1 ist in einem Gehäuse 4 – wie in Fig. 2 zu sehen – an den Stirnflächen über Dichtscheiben 5 abgedichtet und drehbar gelagert. Die Dichtscheiben 5 weisen eine Steueröffnung 6 für den Anschluss einer Abgaszuleitung 7, eine Öffnung 10 für den Anschluss einer Saugleitung 11 zum Durchsaugen von Abgas und je eine Spülöffnung 8, 9 für die Spülung der Probenkammern 2 mit Frischluft auf. An einem Teil des äusseren Umfanges des Kammerzylinders 1 ist bandförmiges Filtermaterial 12 umschlungen, welches von einer nicht dargestellten Vorratsrolle geliefert und durch geeignete Einrichtungen, wie etwa die in Fig. 2 dargestellten Andrückbänder 13, an den äusseren Umfang des Kammerzylinders 1 gepresst wird.

Die feststehenden Steuerkanten der Steueröffnung 6 und Öffnung 10 für die Abgasführung sind so angeordnet, dass bei einer Drehung des Kammerzylinders 1 in Zusammenwirkung mit den Füllöffnungen 2a und Abströmöffnungen 2b der Probenkammern 2 immer ein konstanter Querschnitt für die Durchströmung mit Abgas vorhanden ist, um Schwingungen im Abgasstrom bei der Probenentnahme zu vermeiden. Die für die Durchströmung des Kammerzylinders 1 mit Abgas notwendige Druckdifferenz wird mittels einer hier nicht dargestellten Pumpe oder durch geeignete sonstige Massnahmen in der Abgasleitung erzeugt. Der zeitliche Volumendurchsatz wird dabei so gewählt, dass die Füllung der Probenkammern 2 repräsentativ ist für die Zeitdauer der Probenaufnahme, welche von der Form der Steueröffnung 6 und der Drehzahl des Kammerzylinders 1 abhängt. Die Spülöffnungen 8, 9 für die Frischluft sind so ausgebildet, dass das Absaugen des Abgases über das Filtermaterial 12 über einen längeren Zeitraum bzw. über einen grösseren Drehwinkelbereich des Kammerzylinders 1 als die über Steueröffnung 6 erfolgende Abgasentnahme aus der Zuleitung 7 erfolgt. Dadurch ist es in vorteilhafter Weise möglich, den zur Absaugung der Proben aus den Probenkammern 2 über die Pumpe 14 erzeugten Unterdruck im Innenraum 15 des Gehäuses 4 klein zu halten, um ein Abheben des Filtermaterials 12 von der Oberfläche des Kammerzylinders zu verhindern.

Die Position des Filtermaterials 12 relativ zur Entleerungsöffnung 3 und damit zur einzelnen Probennahme bleibt dabei natürlich auch während der Dauer des Absaugens des Abgases über das Filtermaterial 12 relativ zu diesem unverändert, sodass durch eine bestimmte Filterfläche nur das Abgas aus einer Probenkammer 2 gesaugt wird, wodurch die eindeutige Zuordnungsmöglichkeit der Probennahme zur gemessenen Schwärzung auf alle Fälle gegeben ist. Durch die synchrone Bewegung des am Umfang über den Entleerungsöffnungen 3 aufliegenden Filtermaterials 12 mit dem Kammerzylinder 1 bleibt also die Zuordnung des Kammerinhaltes zu einer bestimmten Filterdurchströmfläche über den ganzen Umfangsbereich des Kammerzylinders 1, auf welchem das Filtermaterial 12 aufliegt, konstant.

Da während der Absaugung der in den Probenkammern 2 enthaltenen Abgasproben die Probenkammern selbst über die Spülöffnungen 8, 9 mit Frischluft in Verbindung stehen, ist sichergestellt, dass das gesamte über die Abgaszuleitung 7 gelieferte Abgas aus den jeweiligen Probenkammern 2 gespült wird.

Die Probenentnahmefrequenz kann bei der dargestellten Anordnung durch die Wahl geeigneter Drehzahlen des Kammerzylinders 1 sowie geeigneter Druckdifferenzen in der Abgasleitung und Unterdrucke über die Pumpe 14 variiert werden.

Das nach dem Durchgang durch das Gehäuse 4 an den mit den Entleerungsöffnungen 3 zusammenwirkenden Stellen geschwärzte bandförmige Filtermaterial 12 wird nach dem Verlassen des Gehäuses 4 einer Auswerteeinrichtung 16 zugeführt, innerhalb welcher die Lichtreflexion des mit Russteilchen bzw. Partikeln geschwärzten Filtermaterials dem Russ- bzw. Partikelgehalt der Verbrennungsabgase zugeordnet und dieser an einer Anzeigeeinrichtung 17 angezeigt wird. Das bereits ausgewertete Filtermaterial 12 kann nach dem Passieren der Auswerteeinrichtung 16 – wie in dicker Linie dargestellt – aus dem Gerät geführt oder – wie in dünner Linie dargestellt – auf einer Sammelspule 18 aufgewickelt werden.

Die Abdichtung des Gehäuses 4 gegenüber dem Kammerzylinder 1 bzw. gegenüber dem Filtermaterial 12 erfolgt im dargestellten Ausführungsbeispiel über Rollen 19, welche das Filtermaterial 12 an die Oberfläche des Kammerzylinders 1 anpressen, bzw. auch über Andrückkörper 20, welche über eine federbelastete Schraube 21 den Spalt zwischen Kammerzylinder 1, Filtermaterial 12 und Rolle 19 bzw. Gehäuse 4 abdichten.

Die Funktion der in den Fig. 1 und 2 dargestellten Einrichtung lässt sich wie folgt vereinfacht beschreiben: Der Kammerzylinder 1 dreht sich mit einer vorbestimmten Drehzahl gegenüber dem dichten Gehäuse 4, wodurch über die Umfangsteilung der Probenkammern 2 am Kammerzylinder eine bestimmte Messfrequenz gegeben ist. Beim Passieren der Steueröffnung 6 wird den Probenkammern 2 über die Abgaszuleitung 7 mittels einer nicht dargestellten Vorrichtung zur Erzeugung eines konstanten Differenzdruckes vor und nach der Probenentnahmevorrichtung Abgas zugeführt, welches dem Betriebszustand der Brennkraftmaschine zum jeweiligen Zeitpunkt entspricht. Die Steueröffnungen 6 sind dabei so gestaltet, dass immer ein konstanter Querschnitt für die Durchströmung der Probenkammern vorhanden ist und die Füllzeit der Kammern möglichst kurz ist. Beim Weiterdrehen des Kammerzylinders 1 werden die Öffnungen 2a, 2b der Probenkammern 2 über die Dichtscheiben 5 abgeschlossen, womit das in den Probenkammern 2 befindliche Abgas von der Umgebung isoliert ist. Sobald die Probenkammern 2 die Spülöffnungen 8 bzw. 9 erreichen, wird der im inneren Raum 15 des Gehäuses 4 herrschende Unterdruck wirksam und das in den Probenkammern 2 befindliche Abgas durch die radialen Entleerungsöffnungen 3 durch das in diesem Bereich anliegende Filtermaterial 12 gesaugt.

Die auf diese Weise entstehenden, in ihrer Ausdehnung den Mündungen der Entleerungsöffnungen 3 entsprechenden, Schwärzungen am Filtermaterial 12 werden über die Auswerteeinrichtung 16 in beschriebener Weise ausgewertet.

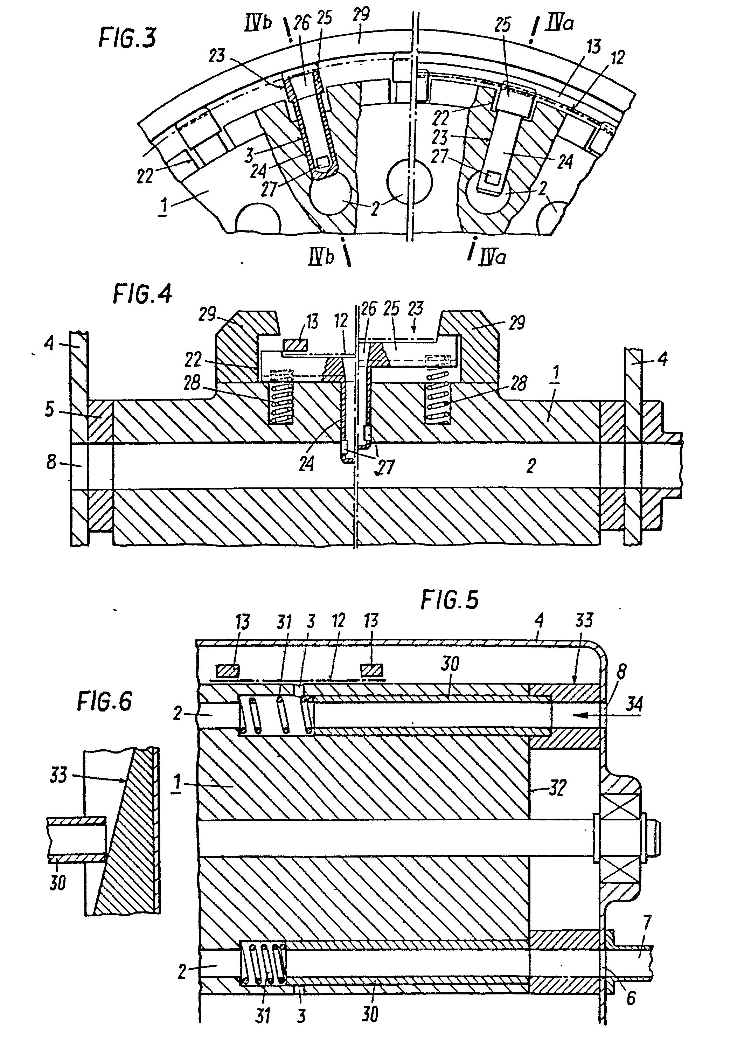

In den Fig. 3 und 4 ist eine mögliche Ausbildung einer zusätzlichen Sperreinrichtung für die Entleerungsöffnung 3 jeder Probenkammer 2 dargestellt. Im Kammerzylinder 1 sind dabei am Umfang Nuten 22 angeordnet, welche zusammen mit der Entleerungsöffnung 3 zur Aufnahme von Schieberventilen 23 dienen. Jedes Schieberventil 23 besteht aus einem in die Entleerungsöffnung 3 axial beweglich eingedichteten Ventilschaft 24 und einem mit diesem verbundenen Querbalken 25, der zur Betätigung des Ventilschaftes 24 dient. Im Ventilschaft 24 ist eine Sackbohrung 26 vorgesehen, welche über eine Querbohrung 27 mit dem Umfang des Ventilschachtes 24 verbunden ist. Über Federn 28, die auf die Querbalken 25 wirken, und Halteringe 29 wird dafür gesorgt, dass das Schieberventil im nicht betätigten Zustand geschlossen bleibt. Dieser Zustand ist auf der rechten Seite von Fig. 4 dargestellt. Beim Auflaufen des bandförmigen Filtermaterials 12 wird, wie in Fig. 4 auf der linken Seite dargestellt, der Querbalken 25 entgegen der Kraft der Federn 28 nach unten gedrückt und über die Querbohrungen 27 eine Verbindung zwischen der Probenkammer 2 und der Sackbohrung 26 in dem in der Entleerungsöffnung 3 eingedichteten Ventilschaft 24 geschaffen. Das in den Probenkammern 2 eingeschlossene Abgas kann somit auf die bereits zu den Fig. 1 und 2 besprochene Weise durch das Filtermaterial 12 abgesaugt werden.

Eine weitere mögliche Ausbildung einer Sperreinrichtung für die Entleerungsöffnungen ist in den Fig. 5 und 6 dargestellt. In den Probenkammern 2 sind konzentrisch zur Achse derselben angeordnete Rohrschieber 30 vorgesehen, welche axial beweglich eingedichtet und über Federn 31 belastet sind. Die Rohrschieber 30 stehen über die Stirnfläche 32 des Kammerzylinders vor und werden über eine entsprechend geformte Steuerkulisse 33 so betätigt, dass sie bei der Füllung der Probenkammern 2 mit Abgas – wie in Fig. 5 unten dargestellt – die Entleerungsöffnung 3 verschliessen und während des Entleerens des Abgases aus den Probenkammern 2, also während des Nachströmens von Frischluft entlang des Pfeiles 34 über die Spülöffnung 8, die Entleerungsöffnungen 3 freigeben. Durch die Formgebung der Steuerkulisse 33 ist es dabei in weiten Grenzen möglich, die Betätigung der Rohrschieber 30 zu variieren.

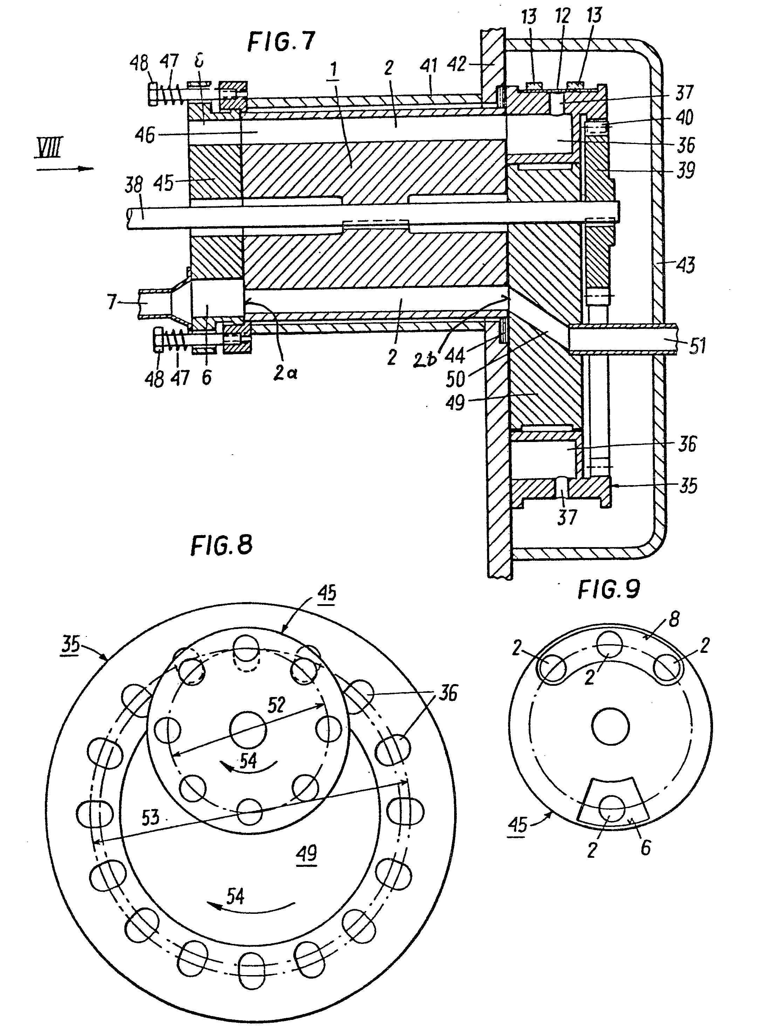

Das in den Fig. 7 bis 9 dargestellte Ausführungsbeispiel weist zusätzlich zum Kammerzylinder 1, der wiederum eine Anzahl von parallelen und konzentrisch angeordneten Probenkammern 2 aufweist, ein Steuerrad 35 auf, welches parallel zum Kammerzylinder 1 drehbar angeordnet ist, und mit einem Teil seiner Stirnfläche gegen einen Teil der Stirnfläche des Kammerzylinders 1 abdichtet. Das Steuerrad 35 weist eine Anzahl rotationssymmetrisch um seine Achse angeordnete Messkammern 36 auf, die zur am Kammerzylinder 1 anliegenden Stirnfläche des Steuerrades hin offen sind und Entleerungsöffnungen 37 zur Mantelfläche des Steuerrades hin aufweisen.

Über eine Achse 38 werden der Kammerzylinder 1 und ein Zahnrad 39 angetrieben, welches seinerseits über eine Verzahnung 40 das Steuerrad 35 antreibt.

Der Kammerzylinder 1 wird von einem Gehäuseteil 41 umgeben, welcher in nicht dargestellter Weise an der Gehäuseplatte 42 befestigt ist. An der dem Gehäuseteil 41 gegenüberliegenden Seite der Gehäuseplatte 42 ist das Steuerrad 35 samt seinem Antrieb von einem Deckel 43 umschlossen, in dessen Innenraum auf hier nicht dargestellte Weise ein Unterdruck erzeugbar ist. Zur Abdichtung gegenüber dem vom Gehäuseteil 41 umschlossenen Raum ist dabei eine Dichtung 44 vorgesehen.

An der dem Steuerrad 35 gegenüberliegenden Stirnfläche des Kammerzylinders 1 wird dieser von einer Kopfplatte 45 abgedeckt, welche, wie in Fig. 9 dargestellt, eine Steueröffnung 6 für die Zuführung von Abgas über eine Abgaszuleitung 7 und eine Spülöffnung 8 für die Zufuhr von Frischluft entlang des Pfeiles 46 aufweist. Die Kopfplatte 45 ist dabei mittels von Schrauben belasteter Federn 47 gegen die Stirnfläche des Kammerzylinders 1 gedrückt.

Die Steueröffnung 6 in der Kopfplatte 45 ist wiederum so ausgebildet, dass in jeder Drehwinkelstellung des Kammerzylinders 1 in Zusammenwirkung mit den Füllöffnungen 2a und Abströmöffnungen 2b der gleiche Durchströmquerschnitt der Probenkammern 2 freigegeben ist; hier ist jeweils immer ein kompletter Querschnitt der Probenkammern 2 freigegeben, da die seitliche Begrenzung der Steueröffnung 6 der Umfangsteilung der Probenkammern 2 entspricht. Ähnliches gilt für die Spülöffnung 8 für die Frischluft; diese ist in Form eines Langloches ausgebildet und überdeckt ständig mehrere der Probenkammern 2.

Auf der Gehäuseplatte 42 ist weiters ein Lagerteil 49 angebracht, an dessen äusserem Umfang das Steuerrad 35 gelagert ist und welcher eine mit der Abströmöffnung 2b zusammenwirkende Bohrung 50 und eine anschliessende Saugleitung 51 aufweist, über welche der zum Füllen der Probenkammern 2 mit Abgas notwendige konstante Differenzdruck erzeugbar ist.

Der Teilkreisdurchmesser 52 sowie die Anzahl der Probenkammern 2 des Kammerzylinders 1 ist halb so gross wie der äussere Teilkreisdurchmesser 53 bzw. die Anzahl der Messkammern 36 am Steuerrad 35. Der Kammerzylinder 1 wird mit der doppelten Drehzahl des Steuerrades 35 angetrieben, wobei die Achsen von Steuerrad und Kammerzylinder um den halben Teilkreisdurchmesser 52 der Abströmöffnungen 2b der Probenkammern 2 parallel verschoben angeordnet sind. Die Abströmöffnungen 2b der Probenkammern 2 weisen in der dargestellten Ausführung denselben kreisförmigen Querschnitt wie die Probenkammern 2 selbst auf. Die Messkammern 36 sind in Form eines sich in radialer Richtung erstreckenden Langlochs ausgebildet, dessen Breite zumindest annähernd dem Durchmesser der Probenkammern 2 und dessen Länge zumindest annähernd der während des Zusammenwirkens mit den Abströmöffnungen 2b der Probenkammern 2 in radialer Richtung überstrichenen Strecke entspricht.

Bei Drehung von Kammerzylinder 1 und Steuerrad 35 in Richtung der Pfeile 54 ist, wie aus Fig. 8 ersichtlich, in einem bestimmten Drehwinkelbereich eine Überdeckung der Abströmöffnung 2b der Probenkammer 2 mit jeweils einer Messkammer 36 gegeben, während welcher, wie aus Fig. 9 ersichtlich, die Füllöffnung 2a der jeweiligen Probenkammern 2 mit der Spülöffnung 8 für die Frischluft zusammenwirkt. Über den innerhalb des Deckels 43 herrschenden Unterdruck wird also in diesem Bereich das in den Probenkammern 2 befindliche Abgas in die Messkammern 36 und über die Entleerungsöffnung 37 durch das wiederum beispielsweise mittels der Andrückbänder 13 am Umfang des Steuerrades 35 gehaltene bandförmige Filtermaterial 12 gesaugt. Auf diese Weise ist wiederum eine Schwärzung des Filtermaterials entsprechend dem Russgehalt der Abgase erzielbar, welche über eine hier nicht dargestellte Auswerteeinrichtung dem Russgehalt der Abgase zuordenbar ist. Auch bei diesem Ausführungsbeispiel kann die Messfrequenz einfach durch Änderung der Drehzahl von Kammerzylinder und Steuerrad variiert werden.

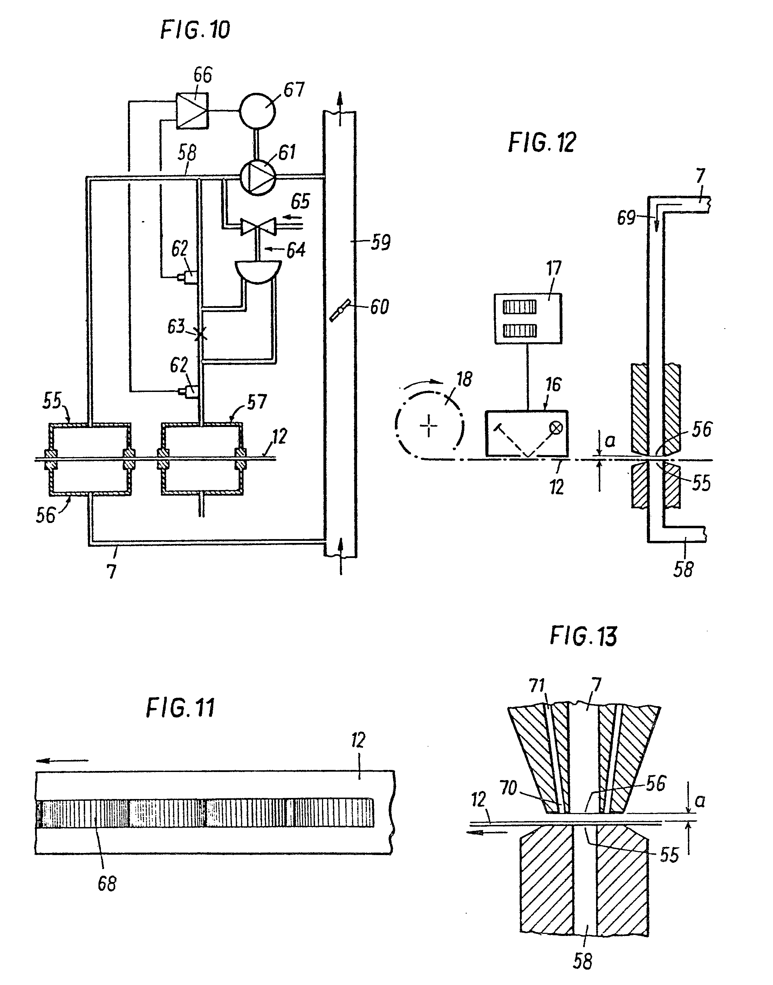

Beim Ausführungsbeispiel nach Fig. 10 ist eine hier nicht dargestellte Einrichtung zur genauen Regelung der Vorschubgeschwindigkeit des bandförmigen Filtermaterials 12 vorgesehen, welches während der gesamten Messdauer kontinuierlich zwischen einer Ableitlöffnung 55 und einer Messöffnung 56 von genau bekanntem Querschnitt in der Abgaszuleitung 7 vorbeibewegt wird. Zur Regelung der Druckdifferenz zwischen Ableitöffnung und Messöffnung, welche direkt den Volumendurchsatz durch das Filtermaterial in der Zeiteinheit beeinflusst, ist hier eine eigene Referenzöffnung 57 vorgesehen, an der das Filtermaterial 12 vor dem Passieren der Messöffnung 56 vorbeibewegt wird. Die Referenzöffnung 57 ist mit der Abgasleitung 58 verbunden und steht an der dem Filtermaterial 12 gegenüberliegenden Seite mit der freien Atmosphäre in Verbindung.

Die Erzeugung des für den Durchgang des Abgases durch das Filtermaterial notwendigen Differenzdruckes zwischen der Abgaszuleitung 7 und der Ableitung 58 kann durch eine in der Abgasleitung 59 angeordnete Drossel 60 oder über eine Saugpumpe 61 oder auch durch eine Kombination der beiden Elemente – wie in Fig. 10 dargestellt – erfolgen. Die Ermittlung des Differenzdruckes erfolgt dabei an der Referenzöffnung am reinen und ungeschwärzten Filtermaterial, wodurch Ungleichmässigkeiten desselben in Bezug auf die Durchlässigkeit ausgeglichen werden können. Als Bezugsgrösse wird dazu die, beispielsweise über zwei geeignete Druckgeber 62 ermittelte Druckdifferenz an einer Messblende 63 verwendet. Die Regelung des Differenzdruckes kann nun entweder mittels eines direkt wirkenden Regelventils 64, welches den Differenzdruck dadurch regelt, dass es mehr oder weniger Frischluft entlang des Pfeiles 65 zuströmen lässt, oder über eine von den Druckgebern 62 belieferte Steuereinheit 66 erfolgen, welche direkt auf die Stromzufuhr zum Pumpenmotor 67 einwirkt. In Fig. 10 ist wiederum eine Kombination dieser Möglichkeiten dargestellt.

Bei einem kontinuierlichen Vorschub des bandförmigen Filtermaterials 12, also gleichmässiger Vorbeibewegung an der Messöffnung 56, entsteht auf dem Filtermaterial 12, wie in Fig. 11 dargestellt, eine kontinuierliche Schwärzungskette 68, an welcher die zeitliche Zuordnung der jeweils auftretenden Schwärzung beispielsweise durch eine hier nicht dargestellte Anbringung von Bezugsmarken neben der Schwärzungskette erleichtert werden kann.

In Fig. 12 ist ein Teil einer Messeinrichtung ähnlich der in Fig. 10 (aber ohne die Anordnung zur Differenzdruckbestimmung) dargestellt. Das zwischen Ableitöffnung 55 und Messöffnung 56 gleichmässig hindurchbewegte bandförmige Filtermaterial 12 wird mittels einer Auswerteeinheit 16 durch Messung der Änderung der Lichtreflexion ausgewertet, wobei die Ergebnisse dieser Auswertung über eine Anzeigeeinrichtung 17 sichtbar gemacht bzw. gespeichert werden können. Nach Vorbeigang des Filtermaterials 12 an der Auswerteeinheit 16 wird das Filterband auf einer Sammelspule 18 aufgewickelt.

Das Filtermaterial 12 wird bei Anlegen einer Druckdifferenz zwischen Ableitöffnung 55 und Messöffnung 56 an der Ableitöffnung 55 unmittelbar anliegen und somit gegenüber der Messöffnung 56 einen gewissen unumgänglichen Spalt a aufweisen. Das in Richtung des Pfeiles 69 zuströmende Abgas wird also zusammen mit einer der Spaltbreite a entsprechenden Zuluftmenge durch das bandförmige Filtermaterial 12 gesaugt und in der Abgasableitung 58 abgeführt.

Der Einfluss der durch den Spalt a zuströmenden Zuluft kann beispielsweise dadurch kompensiert werden, dass die Druckdifferenz entsprechend der Abmessung des Spaltes a auf eine zur Ausführung gemäss Fig. 10 besprochene Art vergrössert wird. Eine andere Möglichkeit besteht darin, dass, wie in Fig. 13 dargestellt, die Messöffnung 56 der Abgaszuleitung 7 von einer zusätzlichen Absaugvorrichtung 70, beispielsweise einem Absaugquerschnitt umgeben ist, welche über einen Saugkanal 71 mit Unterdruck beaufschlagbar ist. Die Messöffnung 56 ist in ihrem Querschnitt etwas grösser dimensioniert als der Querschnitt der Abgasableitung 58, der für die Grösse der Schwärzung auf dem Filtermaterial 12 verantwortlich ist. In der zusätzlichen Absaugvorrichtung 70 wird eine Druckdifferenz erzeugt, welche die durch den Spalt a strömende Zuluft und eine geringe Menge Abgas aus der Abgaszuleitung 7 saugt, wodurch erreicht wird, dass durch das Filtermaterial 12 selbst nur weitgehend unverdünntes Abgas durchtritt.

Bei beiden in den Fig. 10 und 12 dargestellten Messeinrichtungen ist es weiters auch noch möglich, dass bei Abweichung des gemessenen Differenzdruckes von einem Sollwert nicht der Differenzdruck an den Sollwert angeglichen wird, sondern, dass das über die Messeinrichtung 16 ermittelte Messergebnis direkt messtechnisch, beispielsweise elektronisch, korrigierbar ist.

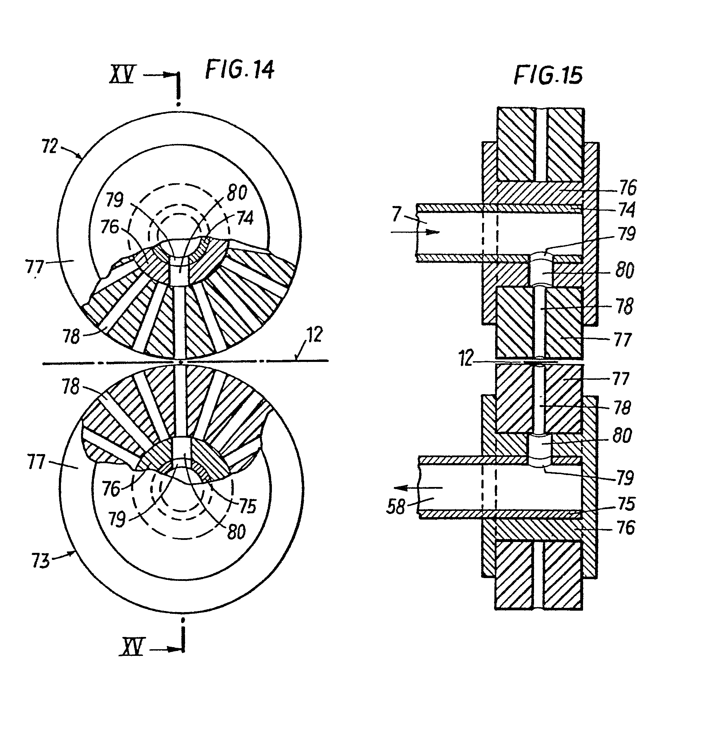

Die in den Fig. 14 und 15 dargestellte Probenentnahmevorrichtung umfasst zwei Kanalzylinder 72, 73, welche auf rohrförmigen Achsen 74, 75 die mit der Abgaszuleitung 7 bzw. mit der Abgasableitung 58 in Verbindung stehen, drehbar und parallel zueinander gelagert sind. Die Kanalzylinder 72, 73 weisen je einen Nabenteil 76 aus nicht verformbarem Material auf, welcher an seiner Aussenseite einen Mantelteil 77 aus elastisch verformbarem Material trägt, in welchem eine Anzahl von radial nach aussen verlaufenden Kanälen 78 vorgesehen ist. Die Kanalzylinder 72, 73 sind in einem solchen Abstand voneinander gelagert, dass sich ihre elastischen Mantelteile 77 an ihrem Umfang zumindest annähernd auf einer Länge berühren, die dem Abstand der Mitten der Mündungen benachbarter Kanäle entspricht, wobei die hohlen Achsen 74, 75 Zu- bzw. Abströmöffnungen 79 aufweisen, welche in Zusammenwirkung mit Bohrungen 80 in den Nabenteilen 76 jeweils nur die Kanäle 78, deren Mündungsbereich an der Mantelfläche des jeweiligen Kanalzylinders am anderen Kanalzylinder anliegt, mit dem Innenraum der hohlen Achsen 74, 75 verbinden. Das beispielsweise bandförmige Filtermaterial 12 ist mit einer der Umfangsgeschwindigkeit der beiden Kanalzylinder 72, 73 entsprechenden Geschwindigkeit zwischen diesen hindurchbewegbar, wobei es im Bereich des elastischen Anliegens der Kanalzylinderoberflächen zu einzelnen, den Mündungsquerschnitten der Kanäle 78 entsprechenden Schwärzungsbereichen auf dem Filtermaterial kommt, welche sodann in bereits zu den vorstehenden Ausführungsformen besprochener Weise auswertbar sind.

Allen behandelten Ausführungsbeispielen gemeinsam ist die aufgrund der erfindungsgemässen Ausbildung mögliche hohe Messfrequenz, mit welcher auch rasche Änderungen in der Abgaszusammensetzung, wie sie beispielsweise während Beschleunigungsphasen von Brennkraftmaschinen auftreten, messtechnisch erfasst werden können.

**Patentansprüche**

1. Verfahren zur Bestimmung des Partikelgehaltes, insbesondere des Russgehaltes, von Verbrennungsabgasen, bei dem beim Durchgang der Verbrennungsabgase durch eine Probenentnahmevorrichtung Partikeln auf gasdurchlässigem Filtermaterial angelagert werden, wobei dem Filtermaterial ein vorbestimmtes Probenvolumen pro beaufschlagter Filterflächeneinheit zugeleitet wird, und bei dem die Lichtreflexion des mit Partikeln geschwärzten Filtermaterials gemessen und dem Partikelgehalt der Verbrennungsabgase zugeordnet wird, dadurch gekennzeichnet, dass in einem Auffüllbereich der Probenentnahmevorrichtung genau bestimmte Probenvolumina mit der gewünschten Messfrequenz quasikontinuierlich entnommen, zu einem Entleerungsbereich der Probenentnahmevorrichtung transportiert und dort mit der Messfrequenz quasikontinuierlich durch das Filtermaterial abgeführt werden, wobei eine konstante Differenz zwischen dem Abgasdruck vor und nach der Probenentnahmevorrichtung eingehalten wird, wobei während eines Messzyklus ständig Abgas durch die Probenentnahmevorrichtung strömt und wobei der Querschnitt der Abgasströmung in der gesamten Probenentnahmevorrichtung zeitlich zumindest annähernd konstant ist, und dass die Bewegung des Filtermaterials durch die Probenentnahmevorrichtung kontinuierlich und die anschliessende Auswertung quasikontinuierlich mit der Messfrequenz erfolgen.

2. Verfahren zur Bestimmung des Partikelgehaltes, insbesonders des Russgehaltes, von Verbrennungsabgasen, wobei beim Durchgang der Verbrennungsabgase durch eine Probenentnahmevorrichtung Partikeln auf gasdurchlässigem Filtermaterial angelagert werden und die Lichtreflexion des mit Partikeln geschwärzten Filtermaterials gemessen und dem Partikelgehalt der Verbrennungsabgase zugeordnet wird, dadurch gekennzeichnet, dass eine konstante Differenz zwischen dem Abgasdruck vor und nach der Probenentnahmevorrichtung eingehalten wird, dass dem mit konstanter Vorschubgeschwindigkeit durch die Probenentnahmevorrichtung bewegten Filtermaterial im beaufschlagten Bereich ein vorbestimmtes Probenvolumen pro Zeiteinheit zugeleitet wird, dass während eines Messzyklus ständig Abgas durch die Probenentnahmevorrichtung strömt, dass der Querschnitt der Abgasströmung in der gesamten Probenentnahmevorrichtung zeitlich zumindest annähernd konstant ist und dass die Probenentnahme sowie die Partikelanlagerung kontinuierlich erfolgen und die anschliessende Auswertung kontinuierlich oder zumindest quasikontinuierlich mit der Messfrequenz erfolgt.

3. Verfahren nach Anspruch 1 oder 2, dadurch gekennzeichnet, dass zur Korrektur von Messwertschwankungen, die infolge variierender Filterdurchlässigkeit auftreten können, eine Differenzdruckmessung vor der Anlagerung von Partikeln an das Filtermaterial durchgeführt wird.

4. Messeinrichtung zur Bestimmung des Partikelgehaltes, insbesondere des Russgehaltes, von Verbrennungsabgasen, mit einer Abgaszuleitung (7) zu einer Probenentnahmevorrichtung (1–6, 8–15; 35–53) sowie mit einer Auswertevorrichtung (16), mittels der die Lichtreflexion von in der Probenentnahmevorrichtung mit Partikeln geschwärztem, gasdurchlässigem Filtermaterial (12) messbar und dem gesuchten Partikelgehalt zuordenbar ist, dadurch gekennzeichnet, dass die Probenentnahmevorrichtung

a) eine Regeleinrichtung, mittels welcher eine konstante Differenz des Abgasdruckes vor und nach der Durchströmung der Probenentnahmevorrichtung einhaltbar ist,

b) rotationssymmetrisch in einem um seine Achse drehbar gelagerten Kammerzylinder (1) angeordnete Probenkammern (2) mit genau bestimmten Volumen, die mit der gewünschten Messfrequenz quasikontinuierlich mit Abgas füllbar und durch das Filtermaterial (12) wieder entleerbar sind,

c) eine Abdeckvorrichtung, die die Füll-, Abström- und Entleerungsöffnungen (2a, 2b, 3) der Probenkammern (2) luftdicht abschliesst, wenn sich die Probenkammern zwischen einem Auffüllbereich und einem Entleerungsbereich befinden und

d) zumindest eine derartig grosse Steueröffnung (6) im Auffüllbereich der Abdeckvorrichtung, dass zu jedem Zeitpunkt der Probenentnahme insgesamt ein zeitlich zumindest annähernd konstanter Zuströmquerschnitt von der Abgaszuleitung (7) zu den Probenkammern (2) freigegeben ist, aufweist und

e) dass das Filtermaterial (12) entsprechend der Drehung des Kammerzylinders (1) bewegbar ist.

5. Messeinrichtung nach Anspruch 4, dadurch gekennzeichnet, dass die Probenkammern (2) im Kammerzylinder (1) als in dessen Längsrichtung durchgehende Bohrungen ausgeführt sind, die die radial zur Mantelfläche des Kammerzylinders führenden Entleerungsöffnungen (3) aufweisen, dass das Filtermaterial (12) über zumindest einen der Winkelteilung der Entleerungsöffnungen (3) der Probenkammern (2) am Kammerzylinder (1) entsprechenden Umfangsteil anliegt, dass zur Erzeugung der für die Entleerung der Probenkammern (2) erforderlichen Druckdifferenz eine Pumpe vorgesehen ist und die den Kammerzylinder (1) zumindest im Bereich des aufliegenden Filtermaterials (12) umgebende Abdeckvorrichtung als Gehäuse (4) ausgebildet ist, welches gegen das Filtermaterial (12) bzw. den Kammerzylinder (1) abdichtet, sodass der Inhalt jeder einzelnen Probenkammer (2), nachdem durch Weiterdrehung des Kammerzylinders (1) die Füllung über die Steueröffnung (6) beendet ist, durch die Wirkung dieser Druckdifferenz über die Entleerungsöffnungen (3) durch das Filtermaterial (12) entleert wird.

6. Messeinrichtung nach Anspruch 5, dadurch gekennzeichnet, dass die Probenkammern (2) Sperreinrichtungen (23; 30) aufweisen, welche die Entleerungsöffnungen (3) zur Mantelfläche des Kammerzylinders (1) nur im Entleerungsbereich der jeweiligen Probenkammer (2) freigeben.

7. Messeinrichtung nach Anspruch 6, dadurch gekennzeichnet, dass die Sperreinrichtungen (23) aus je einem eine Sackbohrung (26) aufweisenden und in die Abströmbohrung (3) axial beweglich eingedichteten, federbelasteten Ventilschaft (24) bestehen, der über einen Querbalken (25) von der Spannung des Filtermaterials (12) betätigbar ist und bei aufliegendem Filtermaterial (12) mittels einer Querbohrung (27) die Probenkammer (2) mit der am Filtermaterial (12) mündenden Sackbohrung (26) verbindet.

8. Messeinrichtung nach Anspruch 6, dadurch gekennzeichnet, dass die Sperreinrichtung von konzentrisch und axial beweglich in den Probenkammern (2) gelagerten, federbelasteten Rohrschiebern (30) gebildet sind, welche über eine Stirnfläche (32) des Kammerzylinders (1) vorstehen und von einer ausserhalb des Kammerzylinders (1) angeordneten Steuerkulisse (33) gegen die Federkraft verschiebbar sind.

9. Messeinrichtung nach einem der Ansprüche 4 bis 6, dadurch gekennzeichnet, dass die Abdeckvorrichtung im Entleerungsbereich Spülöffnungen (8, 9) aufweist, die mit den Füll- und Abströmöffnungen (2a, 2b) der Probenkammern (2) zusammenwirken, wodurch diese bei der Entleerung der Probe mit einem Reinigungsmedium, vorzugsweise Frischluft, durchspülbar sind.

10. Messeinrichtung nach den Ansprüchen 5 und 9, dadurch gekennzeichnet, dass die Spülöffnungen (8, 9) jeweils gleichzeitig mehrere Füllöffnungen (2a) und Abströmöffnungen (2b) überdekken.

11. Messeinrichtung nach Anspruch 4, dadurch gekennzeichnet, dass die Probenentnahmevorrichtung ein Steuerrad (35) aufweist, welches achsparallel zum Kammerzylinder (1) drehbar gelagert ist und jeweils mit zumindest einem Teil seiner dem Kammerzylinder (1) zugewandten Stirnfläche gegen zumindest einen Teil der Stirnfläche des Kammerzylinders abdichtet, dass das Steuerrad (35) rotationssymmetrisch um seine Achse liegende Messkammern (36) aufweist, die zur am Kammerzylinder (1) anliegenden Stirnfläche offen sind, sodass während der über einen gemeinsamen Antrieb erfolgenden Drehung von Kammerzylinder (1) und Steuerrad (35) die Abströmöffnungen (2b) einer bestimmten Anzahl von Probenkammern (2) über einen bestimmten Drehwinkelbereich in Verbindung mit einer entsprechenden Anzahl von Messkammern (36) stehen, und dass die Messkammern (36) die Entleerungsöffnungen (37) zur Mantelfläche des Steuerrades (35) aufweisen, wodurch während der Überdekkung der Messkammern (36) mit den Abströmöffnungen (2b) Abgas aus den Probenkammern (2) durch das auf der Mantelfläche des Steuerrades (35) aufliegende Filtermaterial (12) entleerbar ist, wobei die Füllöffnungen (2a) der Probenkammern in diesem Drehwinkelbereich mit zumindest einer Spülöffnung (8) in Verbindung stehen.

12. Messeinrichtung nach Anspruch 11, dadurch gekennzeichnet, dass der Teilkreisdurchmesser (52) sowie die Anzahl der Abströmöffnungen des Kammerzylinders (1) halb so gross wie der Teilkreisdurchmesser (53) bzw. die Anzahl der mit den Abströmöffnungen zusammenwirkenden Messkammern am Steuerrad (35) sind, und dass die Abströmöffnungen (2b) kreisförmige Querschnitte haben und die Messkammern (36) in Form sich in radialer Richtung erstreckender Langlöcher ausgebildet sind.

13. Messeinrichtung zur Bestimmung des Partikelgehaltes, insbesonders des Russgehaltes, von Verbrennungsabgasen, mit einer Abgaszuleitung (7) zu einer Probenentnahmevorrichtung (72–80) sowie mit einer Auswertevorrichtung, mittels der die Lichtreflexion von in der Probenentnahmevorrichtung mit Partikeln geschwärztem, gasdurchlässigem Filtermaterial (12) messbar und dem gesuchten Partikelgehalt zuordenbar ist, dadurch gekennzeichnet, dass die Probenentnahmevorrichtung eine Regeleinrichtung, mittels welcher eine konstante Differenz des Abgasdruckes vor und nach der Durchströmung der Probenentnahmevorrichtung einhaltbar ist, und zwei Kanalzylinder (72, 73), welche auf rohrförmigen Achsen (74, 75), die mit der Abgaszuleitung (7) bzw. mit der Abgasableitung (58) in Verbindung stehen, drehbar und parallel zueinander gelagert sind, welche zumindest an der Mantelfläche aus elastisch verformbarem Material bestehen und welche jeweils eine Anzahl von radial nach aussen verlaufenden Kanälen (78) aufweisen, umfasst, dass die Kanalzylinder (72, 73) in einem solchen Abstand voneinander gelagert sind, dass sich ihre elastischen Oberflächen an ihrem Umfang zumindest annähernd auf einer Länge berühren, die dem Abstand der Mitten der Mündungen benachbarter Kanäle (78) entspricht, dass die hohlen Achsen (74, 75) Zu- bzw. Abströmöffnungen (79) aufweisen, welche jeweils nur die Kanäle, deren Mündungsbereich an der Mantelfläche des jeweiligen Kanalzylinders am anderen Kanalzylinder anliegt, mit dem Innenraum der hohlen Achsen (74, 75) verbinden, und dass das Filtermaterial (12) mit einer der Umfangsgeschwindigkeit der Kanalzylinder (72, 73) entsprechenden Geschwindigkeit kontinuierlich zwischen diesen hindurchbewegbar ist.

14. Messeinrichtung zur Bestimmung des Partikelgehaltes, insbesonders des Russgehaltes, von Verbrennungsabgasen, mit einer Abgaszuleitung (7) zu einer Probenentnahmevorrichtung (55, 56) sowie mit einer Auswertevorrichtung (16), mittels der die Lichtreflexion von in der Probenentnahmevorrichtung mit Partikeln geschwärztem, gasdurchlässigem Filtermaterial (12) messbar und dem gesuchten Partikelgehalt zuordenbar ist, dadurch gekennzeichnet, dass die Probenentnahmevorrichtung

a) eine Ableitöffnung (55) und eine gegenüberliegende Messöffnung (56) von genau bekanntem Querschnitt in der Abgaszuleitung (7), zwischen denen das bandförmige Filtermaterial (12) während der gesamten Messdauer vorbeibewegbar ist,

b) eine Einrichtung zur genauen Regelung der Vorschubgeschwindigkeit des Filtermaterials (12), und

c) eine Regeleinrichtung zur Einhaltung einer konstanten Druckdifferenz zwischen Ableitöffnung (55) und Messöffnung (56) aufweist, und

d) dass die Abgaszuleitung (7) im Bereich ihrer Messöffnung (56) von einer Absaugvorrichtung (70) umgeben ist.

**Claims**

1. A method of determining particle concentrations in combustion gases, especially the content of carbon black, according to which particles are being deposited on gas-permeable filtering material while the combustion gases are passing through a sampling device, the said filtering material being exposed to a pre-determined sample volume per unit of filter area, and according to which the light reflection of the particle-blackened filtering material is measured and related to the particle content of the combustion gases, wherein precisely metered sample volumes are sampled from a filling zone of said sampling device at the desired measurement rate in a quasi-continuous manner, and are transported to an evacuation zone of said sampling device and discharged through the said filtering material at the measurement rate in a quasi-continuous manner, a constant difference being maintained between the exhaust pressures before and after said sampling device, with a continuous flow of combustion gas through said sampling device during each measurement cycle, the cross-section of the exhaust flow being at least approximately constant over time throughout the entire sampling device, and wherein movement of said filtering material through said sampling device is continuous and the subsequent evaluation quasi-continuous at the given measurement rate.

2. A method of determining particle concentrations in combustion gases, especially the content of carbon black, according to which particles are being deposited on gas-permeable filtering material while the combustion gases are passing through a sampling device, and according to which the light reflection of the particle-blackened filtering material is measured and related to the particle content of the combustion gases, wherein a constant difference is maintained between the exhaust pressures before and after said sampling device, and wherein the exposed part of said filtering material passing through said sampling device at a constant rate of advance is exposed to a pre-determined sample volume per unit of time, and wherein there is a continuous flow of combustion gas through said sampling device during each measurement cycle, and wherein the cross-section of the exhaust flow is at least approximately constant over time throughout the entire sampling device, and wherein sampling and particle deposition are continuous, and the subsequent evaluation is continuous or at least quasi-continuous at the given measurement rate.

3. A method as in claim 1 or 2, wherein variations in the measured values which may occur as a result of variations in filter permeability, are corrected by measuring the pressure difference before any particles have been deposited on said filtering material.

4. A measuring device for determining particle concentrations in combustion gases, especially the content of carbon black, comprising an exhaust feed pipe (7) into a sampling device (1–6, 8–15; 35–53) and an evaluation unit (16) by means of which the light reflection of gas-permeable filtering material (12) that has been blackened with particles in the said sampling device, can be measured and related to the particle content to be determined, wherein the sampling device comprises

(a) a control element for maintaining a constant difference between exhaust pressures before and after passage of the exhaust through said sampling device;

(b) sample chambers (2) of a precisely defined volume which are positioned in a rotation-symmetric way in a chamber cylinder (1) rotating about its axis, and which can be filled with exhaust gas in a quasi-continuous manner at the desired measurement rate and can be evacuated via said filtering material (12);

(c) a cover providing an air-tight seal to the inlet, outlet and evacuation openings (2a, 2b, 3) of said sample chambers (2) if said chambers are located between a filling zone and an evacuation zone, and

(d) at least one control opening (6) in the filling zone of said cover, which opening is large enough to permit an approximately constant flow cross-section from said exhaust feed pipe (7) to said sample chambers (2) to remain open at any time during sampling, and wherein

(e) the said filtering material (12) is moved by rotating said chamber cylinder (1).

5. A measuring device as in claim 4, wherein the sample chambers (2) in said chamber cylinder (1) are through-bores parallel to the cylinder axis, containing said evacuation openings (3) leading radially towards the wall of said chamber cylinder, and wherein said filtering material (12) is pressed against one or more sections of the periphery of said chamber cylinder (1), the sections being defined by the angular distance between said evacuation openings (3) of said sample chambers (2) at said chamber cylinder (1), and wherein a pump is provided in order to generate the differential pressure necessary for evacuating said sample chambers (2), and the cover surrounding the said chamber cylinder (1) at least in the area where said filtering material presses against said cylinder, is configured as a housing (4) sealing against said filtering material (12) and said chamber cylinder (1) such that the content of each individual sample chamber (2) — after filtering through said control opening (6) has been completed by the turning of said chamber cylinder (1) — is evacuated through said filtering material (12) via said evacuation openings (3) as a result of the pressure difference.

6. A measuring device as in claim 5, wherein the sample chambers (2) have closing devices (23; 30) opening said evacuation openings (3) towards the wall of said chamber cylinder (1) only in the evacuation zone of the corresponding sample chamber (2).

7. A measuring device as in claim 6, wherein each closing device (23) comprises a spring-loaded valve stem (24) which contains a pocket bore (26) and is fitted into said evacuation opening (3) so as to be axially movable, and which is actuated by the tension of said filtering material (12) via a cross-bar (25), connecting said sample chamber (2) and said pocket bore (26) opening into said filtering material (12) by means of a cross-bore (27), when the said filtering material (12) is pressing against the chamber cylinder.

8. A measuring device as in claim 6, wherein the closing devices are configured as spring-loaded sleeve valves (30) which are concentric with the said sample chambers (2) in which they are axially movable, and which protrude beyond a front face (32) of said chamber cylinder (1) and can be slid against the action of the spring by means of a wedge-shaped control element (33) located outside of said chamber cylinder (1).

9. A measuring device as in any of claims 4 to 6, wherein the cover has scavenging ports (8, 9) in the evacuation zone, cooperating with said inlet and outlet openings (2a, 2b) of said sample chambers (2) such that said chambers can be scavenged with a cleansing medium — preferably fresh air — after the sample has been discharged.

10. A measuring device as in claims 5 and 9, wherein each of said scavenging ports (8, 9) covers several inlet openings (2a) and outlet openings (2b) simultaneously.

11. A measuring device as in claim 4, wherein the sampling device has a rotatable control disk (35) whose axis is parallel to that of said chamber cylinder (1) and at least part of whose front facing said chamber cylinder (1) seals against at least part of the front face of said cylinder, and wherein said control disk (35) has measuring chambers (36) which are positioned around the disk axis in a rotation-symmetric way, and which open towards the front face of said disk adjoining said chamber cylinder (1) such that, during rotation of chamber cylinder (1) and control disk (35), which is effected by a common drive mechanism, the outlet openings (2b) of a given number of sample chambers (2) are connected to a corresponding number of measuring chambers (36) in a certain range of the rotation angle, and wherein said measuring chambers (36) contain the evacuation openings (37) towards the peripheral wall of said control disk (35) such that — while said measuring chambers (36) are coinciding with said outlet openings (2b) — exhaust gas from said sample chambers (2) can be discharged through said filtering material (12) pressing against the peripheral wall of said control disk (35), the inlet openings (2a) of said sample chambers being connected to at least one scavenging port (8) in this range.

12. A measuring device as in claim 11, wherein the diameter (52) of the reference circle carrying the centers of the sample chambers and the number of outlet openings of said chamber cylinder (1) amount to half the reference diameter (53) and half the number of measuring chambers at said control disk (35) cooperating with the outlet openings, and wherein said outlet openings (2b) have circular cross-sections and said measuring chambers (36) are configured as holes with oblong cross-sections extending in radial direction.

13. A measuring device for determining particle concentrations in combustion gases, especially the content of carbon black, comprising an exhaust feed pipe (7) into a sampling device (72–80), and an evaluation unit by means of which the light reflection of gas-permeable filtering material (12) that has been blackened with particles in the said sampling device, can be measured and related to the particle content to be determined, wherein the sampling device comprises a control element for maintaining a constant difference of exhaust pressures before and after passage of the exhaust through said sampling device, and two channel cylinders (72, 73) which are mounted in tubular shafts connected to the said exhaust feed pipe (7) and the said exhaust outlet pipe (58) such that they are rotatable and parallel to each other, and whose surface at least is made of elastic material, and which have a number of radial channels (78), and wherein said channel cylinders (72, 73) are mounted at such a distance of each other that their elastic surfaces touch at their peripheries over a length corresponding to the distance of the centers of the openings of adjacent channels (78), and wherein the hollow shafts (74, 75) have inlet and outlet openings (79) connecting only those channels whose openings at the circumference of the respective channel cylinder coincide with the other channel cylinder, to the interior of the said hollow shafts (74, 75), and wherein said filtering material (12) moves continuously between said channel cylinders (72, 73) at a rate corresponding to the circumferential velocity of said cylinders.

14. A measuring device for determining particle concentrations in combustion gases, especially the content of carbon black, comprising an exhaust feed pipe (7) into a sampling device (55, 56) and an evaluation unit (16) by means of which the light reflection of gas-permeable filtering material (12) that has been blackened with particles in said sampling device, can be measured and related to the particle content to be determined, wherein the sampling device comprises

(a) an outlet opening (55) and a measurement opening (56) of a defined cross-section situated in said exhaust feed pipe vis-à-vis said outlet opening, between which openings the ribbon-like filtering material (12) moves throughout the duration of measurement, and

(b) a device for accurate control of the rate of advance of said filtering material (12), and

(c) a control element for maintaining a constant pressure difference between outlet opening (55) and measurement opening (56), and

(d) wherein said exhaust feed pipe (7) is surrounded by a suction device (70) in the area of its measurement opening (56).

**Revendications**

1. Procédé pour déterminer la teneur en particules, en particulier la teneur en suie, de gaz de combustion, dans lequel, lors du passage des gaz de combustion à travers un dispositif de prélèvement d'échantillons, des particules viennent s'appliquer sur un matériau filtrant perméable au gaz, étant précisé que l'on amène au matériau filtrant un volume d'échantillon prédéterminé par unité de surface filtrante sous pression et dans lequel on mesure la réflexion de la lumière sur le matériau filtrant noirci par les particules et on lui fait correspondre la teneur en particules des gaz de combustion, caractérisé en ce que l'on prélève dans une zone de remplissage du dispositif de prélèvement d'échantillon des volumes d'échantillon déterminés avec précision, à la fréquence de mesure désirée, de façon quasi-continue, on les transporte vers une zone de vidange du dispositif de prélèvement d'échantillon et là on les extrait à travers le matériau filtrant, de façon quasi-continue, avec la fréquence de mesure, étant précisé que l'on maintient une différence constante entre la pression des gaz de combustion avant et après le dispositif de prélèvement d'échantillon, étant précisé aussi que, pendant un cycle de mesure du gaz de combustion, s'écoule en permanence à travers le dispositif de prélèvement d'échantillon et que la section d'écoulement du gaz de combustion dans l'ensemble du dispositif de prélèvement d'échantillon est, au moins approximativement, constante dans le temps; et en ce que le déplacement du matériau filtrant à travers le dispositif de prélèvement d'échantillon se fait de façon continue et l'analyse, qui suit, se fait de façon quasi-continue, à la fréquence de mesure.

2. Procédé pour déterminer la teneur en particules, en particulier la teneur en suie, de gaz de combustion, dans lequel, lors du passage des gaz de combustion à travers un dispositif de prélèvement d'échantillons, des particules viennent s'appliquer sur un matériau filtrant perméable au gaz, et dans lequel on mesure la réflexion de la lumière sur le matériau filtrant noirci par les particules et on la fait correspondre à la teneur en particules des gaz de combustion, caractérisé en ce que l'on maintient une différence constante entre la pression du gaz de combustion avant et après le dispositif de prélèvement d'échantillon; en ce que l'on amène un volume prédéterminé d'échantillons par unité de temps, dans la zone du matériau filtrant sous pression, à ce matériau qui se déplace à vitesse d'avancement constante à travers le dispositif de prélèvement d'échantillons; en ce que pendant un cycle de mesure du gaz de combustion s'écoule en permanence à travers le dispositif de prélèvement d'échantillons; en ce que la section d'écoulement des gaz de combustion dans l'ensemble du dispositif de prélèvement d'échantillons est, au moins approximativement, constante dans le temps; et en ce que le prélèvement d'échantillons ainsi que l'application des particules sur le matériau filtrant se font en continu et l'analyse, qui suit, se fait en continu ou tout au moins en quasi-continu, à la fréquence de mesure.

3. Procédé selon la revendication 1 ou la revendication 2, caractérisé en ce que, pour corriger des écarts de valeur de mesure qui peuvent se produire par suite d'une variation de la perméabilité du filtre, on exécute une mesure de pression différentielle avant d'appliquer les particules sur le matériau filtrant.

4. Dispositif de mesure pour déterminer la teneur en particules, en particulier la teneur en suie, de gaz de combustion, comportant une conduite d'amenée (7) du gaz de combustion à un dispositif de prélèvement d'échantillons (1–6, 8–15; 35–53) ainsi qu'un dispositif d'analyse (16) qui permet de mesurer la réflexion de la lumière sur un matériau filtrant (12) perméable au gaz et noirci par des particules dans le dispositif de prélèvement d'échantillons et de lui faire correspondre la teneur en particules recherchée, caractérisé en ce que le dispositif de prélèvement d'échantillons

a) présente un dispositif de régulation qui permet de maintenir une différence constante de la pression du gaz de combustion avant et après son écoulement à travers le dispositif de prélèvement d'échantillon;

b) présente des chambres à échantillon (2), d'un volume déterminé avec précision, qui sont disposées en symétrie de rotation dans un cylindre à chambre (1) tourillonnant autour de son axe, que l'on peut remplir de gaz de combustion à la fréquence de mesure désirée, de façon quasi-continue et que l'on peut à nouveau vider à travers le matériau filtrant (12);

c) présente un dispositif de capotage qui obture, de façon étanche à l'air, les ouvertures de remplissage, de sortie et de vidange (2a, 2b, 3) des chambres à échantillon (2) lorsque les chambres à échantillon se trouvent entre une zone de remplissage et une zone de vidange;

d) présente au moins, dans la zone de remplissage du dispositif de capotage, une ouverture de commande (6) d'une dimension telle qu'à chaque instant du prélèvement d'échantillon une section de passage, entre la conduite d'amenée (7) du gaz de combustion et les chambres à échantillon (2), au moins approximativement constante dans le temps, est globalement libérée, et

e) en ce que le matériau filtrant (12) peut se déplacer en fonction de la rotation du cylindre à chambres (1).

5. Dispositif de mesure selon la revendication 4, caractérisé en ce que les chambres à échantillon (2) dans le cylindre à chambres (1) sont exécutées sous forme d'alésage traversant dans sa direction longitudinale et présentant des ouvertures de vidanges (3) se dirigeant radialement vers la surface périphérique du cylindre à chambres; en ce que le matériau filtrant (12) s'applique sur au moins une partie périphérique correspondant à la répartition angulaire des ouvertures de vidange (3) des chambres d'échantillon (2) sur le cylindre à chambres (1); en ce que pour produire la différence de pression nécessaire pour la vidange des chambres à échantillon (2) est prévue une pompe; et en ce que le dispositif de capotage, qui entoure le cylindre à chambres (1) au moins dans la zone du matériau filtrant (12) appliqué sur lui, est conçu sous forme d'un carter (4) qui est étanche à l'égard du matériau filtrant (12) et du cylindre à chambres (1), de sorte que, après que le remplissage par l'intermédiaire de l'ouverture de réglage (6) se soit terminé du fait que le cylindre à chambres (1) continue à tourner, le contenu de chaque chambre à échantillon distincte (2) est vidé, sous l'action de cette différence de pression, par l'intermédiaire des ouvertures de vidange (3) et à travers le matériau filtrant (12).

6. Dispositif de mesure selon la revendication 5, caractérisé en ce que les chambres à échantillon (2) présentent des dispositifs de verrouillage (23, 30) qui ne libèrent les ouvertures de vidange (3) en direction de la surface périphérique du cylindre à chambres (1) que dans la zone de vidange de la chambre à échantillon respective (2).

7. Dispositif de mesure selon la revendication 6, caractérisé en ce que les dispositifs de verrouillage (23) sont constitués de respectivement une tige de soupape (24) qui est sollicitée par un ressort, qui présente un alésage borgne (26), qui est introduite, avec étanchéité et avec possibilité de déplacement axial, dans l'alésage de sortie (3), que la tension du matériau filtrant (12) peut manœuvrer par l'intermédiaire d'un poussoir (25) et qui, lorsque le matériau filtrant (12) est appliqué sur le cylindre, relie, au moyen d'un alésage transversal (27), la chambre d'échantillon (2) à l'alésage borgne (26) qui débouche sur le matériau filtrant (12).

8. Dispositif de mesure selon la revendication 6, caractérisé en ce que les dispositifs de verrouillage sont formés de tiroirs tubulaires (30) qui sont sollicités par un ressort, qui reposent dans les chambres à échantillon (2) concentriquement et avec possibilité de déplacement axial, qui dépassent au-delà d'une surface frontale (32) du cylindre à chambres (1) et qu'une coulisse de commande (33) disposée à l'extérieur du cylindre à chambres (1), peut faire coulisser contre la force du ressort.

9. Dispositif de mesure selon l'une des revendications 4 à 6, caractérisé en ce que le dispositif de capotage présente, dans la zone de vidange, des ouvertures de rinçage (8, 9) qui collaborent avec les ouvertures de remplissage et de sortie (2a, 2b) des chambres à échantillon (2), ce qui permet de rincer ces chambres, lors de la vidange de l'échantillon, avec un fluide de nettoyage, de préférence de l'air frais.

10. Dispositif de mesure selon l'une des revendications 5 et 9, caractérisé en ce que les ouvertures de rinçage (8, 9) recouvrent chacune simultanément plusieurs ouvertures de remplissage (2a) et de sortie (2b).

11. Dispositif de mesure selon la revendication 4, caractérisé en ce que le dispositif de prélèvement d'échantillon présente une roue de commande (65) qui tourillonne avec son axe parallèle à celui du cylindre à chambres (1) et qui est respectivement étanche, par au moins une partie de sa surface frontale tournée vers le cylindre à chambres (1), à l'égard d'au moins une partie de la surface frontale du cylindre à chambres; en ce que la roue de commande (35) présente des chambres de mesure (36) qui sont disposées en symétrie de rotation autour de son axe et qui sont ouvertes en direction de la surface frontale appliquée contre le cylindre à chambres (1), de sorte que, pendant la rotation, qui se fait par l'intermédiaire d'un entraînement commun, du cylindre à chambres (1) de la roue de commande (35), les ouvertures de sortie (2b) d'un nombre déterminé de chambres à échantillon (2) sont en liaison, le long d'une plage angulaire déterminée, avec un nombre correspondant de chambres de mesure (36); et en ce que les chambres de mesure (36) présentent les ouvertures de vidange (37) en direction de la surface périphérique de la roue de commande (35), ce qui fait que, pendant le recouvrement des chambres de mesure (36) par les ouvertures de sortie (2b), le gaz de combustion peut se vidanger hors des chambres à échantillon (2), à travers le matériau filtrant (12) appliqué sur la surface périphérique de la roue de commande (35), étant précisé que les ouvertures de remplissage (2a) des chambres à échantillon qui se trouvent sur cette plage angulaire sont en liaison avec au moins une ouverture de rinçage (8).

12. Dispositif selon la revendication 11, caractérisé en ce que le diamètre primitif (52) ainsi que le nombre des ouvertures de sortie du cylindre à chambres (1) ont la demi-valeur du diamètre primitif (53) et du nombre des chambres de mesure de la roue de commande (35) collaborant avec les ouvertures de sortie; et en ce que les ouvertures de sortie (2b) ont des sections circulaires et en ce que les chambres de mesure (36) ont la forme de lumières s'étendant en direction radiale.

13. Dispositif de mesure pour déterminer la teneur en particules, en particulier la teneur en suie, de gaz de combustion, comportant une conduite d'amenée (7) du gaz de combustion à un dispositif de prélèvement d'échantillons (72, 80) ainsi qu'un dispositif d'analyse qui permet de mesurer la réflexion de la lumière sur un matériau filtrant (12) perméable au gaz et noirci par des particules dans le dispositif de prélèvement d'échantillons et de lui faire correspondre la teneur en particules recherchée, caractérisé en ce que le dispositif de prélèvement d'échantillon comporte un dispositif de régulation qui permet de maintenir une différence constante de la pression du gaz de combustion avant et après son écoulement à travers le dispositif de prélèvement d'échantillon, ainsi que deux cylindres à canaux (72, 73) qui peuvent tourillonner, parallèlement l'un à l'autre, sur des axes tubulaires (74, 75) qui sont reliés à la conduite d'amenée du gaz de combustion (7) et à la conduite d'évacuation (58), qui sont constitués, au moins sur la surface périphérique, de matériau élastiquement déformable et qui présentent chacun un certain nombre de canaux (78) qui courent radialement vers l'extérieur; en ce que les cylindres à canaux (72, 73) sont placés à une distance l'un de l'autre telle que leurs surfaces élastiques sont au contact, à leur périphérie, au moins approximativement sur une longueur qui correspond à la distance des axes des embouchures de canaux voisins (78); en ce que les axes creux (74, 75) présentent des ouvertures d'entrée et de sortie (79) qui ne relient respectivement, à l'espace interne des axes creux (74, 75), que les canaux dont la zone d'embouchure à la surface périphérique de chaque cylindre à canaux s'applique contre l'autre cylindre à canaux; et en ce que le matériau filtrant (12) peut se déplacer en continu entre ces surfaces à une vitesse correspondant à la vitesse périphérique des cylindres à canaux (72, 73).

14. Dispositif de mesure pour déterminer la teneur en particules, en particulier la teneur en suie, de gaz de combustion, comportant une conduite d'amenée (7) des gaz de combustion à un dispositif de prélèvement d'échantillon (55, 56) ainsi qu'un dispositif d'analyse (16) qui permet de mesurer la lumière réfléchie par le matériau filtrant (12) perméable au gaz et noirci par des particules dans le dispositif de prélèvement d'échantillon et de lui faire correspondre la teneur en particules recherchée, caractérisé en ce que le dispositif de prélèvement d'échantillon présente:

a) une ouverture d'évacuation (55) et une ouverture de mesure (56) située en face, de section connue avec précision, dans la conduite d'amenée (7) du gaz de combustion, ouvertures entre lesquelles on peut faire avancer le matériau filtrant (12) en forme de bande pendant toute la durée de la mesure;

b) un dispositif de régulation précise de la vitesse d'avancement du matériau filtrant (12) et

c) un dispositif de régulation permettant de maintenir une différence de pression constante entre l'ouverture d'évacuation (55) et l'ouverture de mesure (56),

d) en ce que la conduite d'amenée du gaz de combustion (7) est entourée, dans la zone de son ouverture de mesure (56), d'un dispositif d'aspiration (70).

0 048 237

## FIG.1

## FIG.2

15

0 048 237

FIG.3

FIG.4

FIG.5

FIG.6

17

0 048 237

**FIG.7**

**FIG.8**

**FIG.9**

19

FIG.10

FIG.12

FIG.11

FIG.13

FIG.14

FIG.15